# FASCICULE DE BREVET EUROPEEN

(11) **EP 2 210 396 B1**
(45) Date de publication et mention de la délivrance du brevet: **14.12.2011**
(21) Numéro de dépôt: 08870181.8
(22) Date de dépôt: 09.10.2008
(51) Int. Cl.: H04L 29/06, H04L 29/08, H04L 12/26

(54) **SYSTÈME D'INTERCONNEXION ENTRE AU MOINS UN APPAREIL DE COMMUNICATION ET AU MOINS UN SYSTÈME D'INFORMATION DISTANT ET PROCÉDÉ D'INTERCONNEXION**
SYSTEM ZUR HERSTELLUNG EINER VERBINDUNG ZWISCHEN MINDESTENS EINER KOMMUNIKATIONSVORRICHTUNG UND MINDESTENS EINEM FERNINFORMATIONSSYSTEM SOWIE VERBINDUNGSVERFAHREN
SYSTEM OF INTERCONNECTION BETWEEN AT LEAST ONE COMMUNICATION APPARATUS AND AT LEAST ONE REMOTE INFORMATION SYSTEM AND INTERCONNECTION METHOD

(30) Priorité: 11.10.2007 FR 0707147
(43) Date de publication de la demande: 28.07.2010
(73) Titulaire: Mobile Service, 38330 Saint Ismier (FR)
(72) Inventeur: PERRET Stéphane, 06140 Vence (FR)
(74) Mandataire: Dubreu, Sandrine
(86) Numéro de dépôt international: PCT/FR2008/001419
(87) Numéro de publication internationale: WO 2009/087283

(56) Documents cités:
- WO-A-2006/136660
- WO-A-2007/072125
- US-A1- 2007 150 946

## Description

### Domaine technique de l'invention

L'invention est relative à un système d'interconnexion comportant au moins un appareil de communication et au moins un système d'information distant, l'appareil de communication comportant :
- au moins un premier lien de connexion réseau,
- au moins un composant de service, connecté au premier lien de connexion réseau et comportant des moyens d'émission, avec une période prédéterminée, de signaux de notification de présence,
chaque composant de service de l'appareil de communication étant associé à un système d'information distant comportant :
- un second lien de connexion réseau,
- et un agent de service distant, affecté audit composant de service, ledit agent de service distant étant connecté audit second lien de connexion réseau.

L'invention concerne également un procédé d'interconnexion d'un appareil de communication à au moins un système d'information distant.

### État de la technique

Une entreprise souhaitant mettre en place un service ou une application mobile en permettant l'accès à son système d'information par Internet a le choix entre deux options. Elle peut utiliser les solutions proposées par les opérateurs mobiles avec les services de voix, texto et/ou Visio. Elle peut aussi utiliser directement le service « data » (connexion à l'Internet via un réseau cellulaire) des opérateurs mobiles, ainsi que les réseaux locaux sans fil disponibles. Cette deuxième option de convergence des réseaux vers l'accès Internet est annoncée comme le futur de toute communication mobile. À cet égard, il existe déjà des services de voix utilisant le protocole de Voix sur Internet VOIP (« Voice Over Internet Protocol ») avec les prémices d'extension aux réseaux sans fil domestique.

Les infrastructures des opérateurs mobiles intègrent des solutions pour répondre à la problématique d'échanges bidirectionnels entre un système d'information distant et des appareils mobiles. Ces offres sont toutefois fragiles car elles sont limitées à l'usage de l'infrastructure de l'opérateur mobile et ne permettent pas de bénéficier des réseaux locaux sans fil gratuit. De plus, elles ne sont pas sécurisées autrement que par la garantie de confidentialité de l'opérateur vis-à-vis de ses clients:

Les réseaux locaux se démocratisent notamment grâce au développement des technologies sans fil telles que le WIFI « Wireless Fidelity ». Cette augmentation du potentiel de connexion à l'Internet s'accompagne de l'utilisation de mécanismes dynamiques de masquage d'adresses et de protection des accès par pare-feux et translation d'adresses. Un appareil connecté dans ce type de réseaux n'est pas accessible directement de l'extérieur.

Il existe aussi des solutions embarquées sur téléphonie mobile qui permettent d'avoir accès en temps réel à des informations. Notamment dans le domaine du courrier électronique, des solutions dites de « push-mail » (le courrier électronique est poussé, dès sa réception, vers un client de messagerie local d'un utilisateur sans que ce dernier en fasse la demande) permettent à un utilisateur de recevoir ses courriels en temps réel si le téléphone mobile est couvert par le réseau de son opérateur mobile. Ces solutions utilisent des serveurs distants, sur lesquels un utilisateur est enregistré. Lorsqu'un de ces serveurs reçoit un courriel à destination d'un utilisateur enregistré, le courriel est poussé vers le téléphone mobile de l'utilisateur par une passerelle spéciale mise en place entre le serveur et l'opérateur téléphonique. Un des inconvénients de ces solutions est que l'utilisateur est dépendant de la couverture du réseau téléphonique pour la réception des messages et que de tels abonnements sont coûteux.

Une autre approche est l'utilisation de la VOIP et notamment de la technologie du protocole d'initiation de session SIP « Session Initiation Protocol ». Le protocole SIP permet à un composant de service d'un appareil de communication d'utiliser un lien IP « Internet Protocol » afin de s'enregistrer au niveau d'un serveur public. Une machine sur l'Internet est joignable par l'intermédiaire d'un couple formé par son adresse IP et son port. Lorsque l'appareil de communication, par exemple un téléphone, est actif, il se connecte au serveur public, qui récupère le couple permettant de joindre l'appareil de communication. Ainsi, toute personne souhaitant envoyer des messages à l'appareil de communication peut simplement interroger le serveur public afin de récupérer l'adresse IP et le port sur lequel est joignable le téléphone. Cependant cette approche a un inconvénient majeur. En effet, aujourd'hui un appareil connecté à l'Internet n'a pas forcément une adresse IP publique. C'est-à-dire qu'il n'est pas directement joignable. Il faut auparavant passer des protections de type pare-feux. Ceci implique des modifications au niveau de la configuration des pare-feux pour rendre accessible chaque téléphone qui se situerait derrière de tels pare-feux.

La technologie de réseau privé virtuel VPN (« Virtual Private Network » en anglais) est un moyen d'ouvrir un canal sécurisé avec un réseau privé au sein duquel se trouve le système d'information. Dans le cadre d'un accès par VPN, le canal de communication est ouvert uniquement entre un appareil de communication et un réseau privé, ce qui permet effectivement au système d'information de contacter l'appareil de communication. Cependant, l'étendue des systèmes d'information joignable est limitée aux systèmes disponibles à travers le réseau privé auquel l'appareil de communication est connecté, excluant ainsi toute véritable notion de multiservices. De plus l'ouverture d'un canal sécurisé de type VPN est une solution risquée en terme de sécurité puisque l'on se trouve directement dans le réseau privé hébergeant le système d'information.

Le document EP-A1-1715656 décrit l'utilisation d'une connexion sans fil pour envoyer des messages d'un système d'information distant vers un appareil de communication. Le système d'information distant peut détecter la connexion ou la non-connexion de l'appareil de communication à partir de signaux de notification de présence émis par l'appareil de communication. En effet, lorsqu'un appareil de communication se connecte, il s'enregistre au niveau du système d'information puis signale sa présence à intervalles réguliers. Lorsqu'un message ne peut être délivré suite à la non connexion de l'appareil de communication, les messages à transmettre sont stockés dans le système d'information distant en attente d'une reconnexion de l'appareil de communication. Le système d'information distant supprime les messages anciens, restés stockés trop longtemps. Un tel système n'est pas optimisé pour la détection de la déconnection de l'appareil de communication et ne permet pas de passer les protections de type pare-feux et de translation d'adresse.

Le document WO2006/136660 décrit une méthode pour maintenir une connexion internet IP entre un appareil mobile et un serveur, par exemple un serveur de mail. Au cours d'une période d'inactivité du réseau, des messages de maintien de connexion (« keep-alive » en anglais) sont envoyés à intervalles prédéterminés par l'appareil mobile vers le serveur et ou inversement. Ces messages de maintien de connexion ont pour but d'agir sur une passerelle réseau cellulaire vers réseau IP afin que les timers de l'opérateur surveillant cette passerelle ne coupent la connexion. Une telle méthode agit uniquement sur la passerelle et ne permet pas de limiter l'utilisation des ressources du serveur.

Le document WO2007/072125 décrit une méthode de gestion des connexions dans un réseau de communication mobile de type client/serveur. Le serveur envoie des messages en direction du client à intervalles prédéterminés pour maintenir la connexion. La période d'émission des messages du serveur vers le client est ajustable par le serveur lui-même ou par le client.

### Objet de l'invention

L'invention a pour objet un système d'interconnexion ayant pour but d'éviter les inconvénients des systèmes connus. Plus particulièrement elle doit permettre de maintenir en permanence, à travers des réseaux sécurisés, un contact entre des appareils de communication, en particulier mobile, et des systèmes d'information distants, quel que soit le type de réseau sans fil disponible. De plus, elle permet de savoir si l'appareil mobile est toujours connecté au système d'information distant selon une finesse déterminée et ajustable tout en limitant les coûts de communication.

Ce but est atteint par un système selon les revendications annexées. En particulier, par le fait que le composant de service et l'agent de service distant, qui lui est affecté, sont reliés par un canal de communication, qui leur est affecté, les signaux de notification de présence étant transmis par l'intermédiaire du canal de communication, et en ce que l'agent de service distant comporte :
- des moyens d'ajustement de la période d'émission des signaux de notification de présence du composant de service, et
- des moyens de détection pour détecter une isolation du composant de service par rapport à l'agent de service distant en l'absence de réception d'un signal de notification de présence du composant de service.

Un tel système permet, de manière peut coûteuse, de rendre joignable l'appareil de communication à tout moment tant que celui-ci est couvert par un réseau Internet.

L'invention a également pour objet un procédé d'interconnexion entre un appareil de communication et au moins un système d'information distant d'un tel système d'interconnexion. Ce procédé comporte successivement les étapes suivantes :
- le composant de service établit une connexion Internet,
- le composant de service établit via la connexion Internet, un canal de communication avec l'agent de service distant correspondant,
- le composant de service envoie des signaux de notification de présence à l'agent de service distant, avec une période réglable définie par l'agent de service distant au moins une fois après l'établissement du canal de communication,
- l'agent de service distant recevant les signaux de notification de présence compare la durée écoulée depuis la réception du dernier signal de notification de présence à un seuil prédéterminé, et, si cette durée devient supérieure au seuil sans réception d'un nouveau signal de notification de présence, l'agent de service distant en déduit que le composant de service n'est plus joignable et il supprime le canal de communication.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un système d'interconnexion entre un appareil de communication et un système d'information distant.
La figure 2 illustre schématiquement la composition de l'appareil de communication.
La figure 3 illustre schématiquement la composition du système d'information distant.
La figure 4 illustre, de manière plus détaillée, les moyens de détection de réseau de l'appareil de communication.
La figure 5 illustre, sous forme de diagramme, l'échange d'informations permettant de détecter l'isolation de l'appareil de communication.
La figure 6 illustre un système d'interconnexion selon l'invention avec un canal de communication.
La figure 7 illustre un mode de réalisation particulier du composant de service.
La figure 8 illustre le diagramme de connexion d'un mode de réalisation particulier d'un système d'interconnexion selon l'invention.

### Description de modes de réalisation particuliers

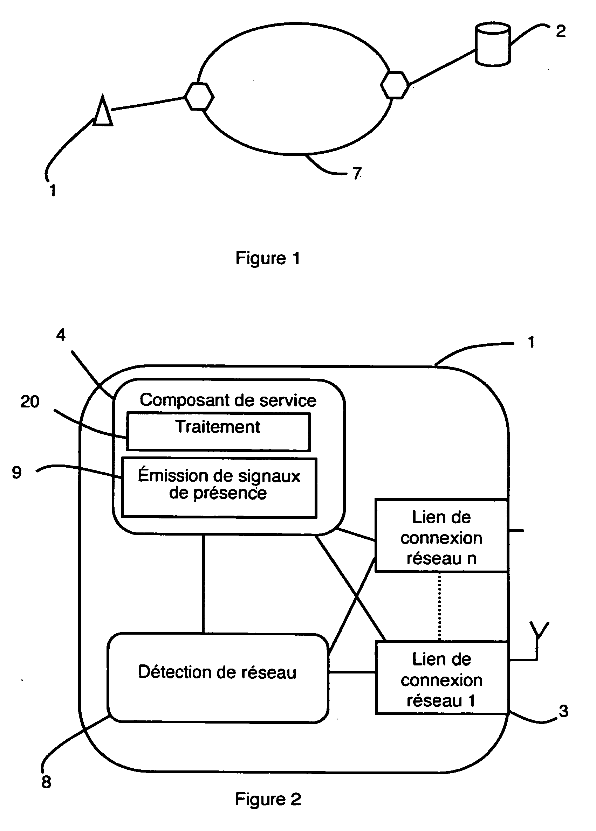

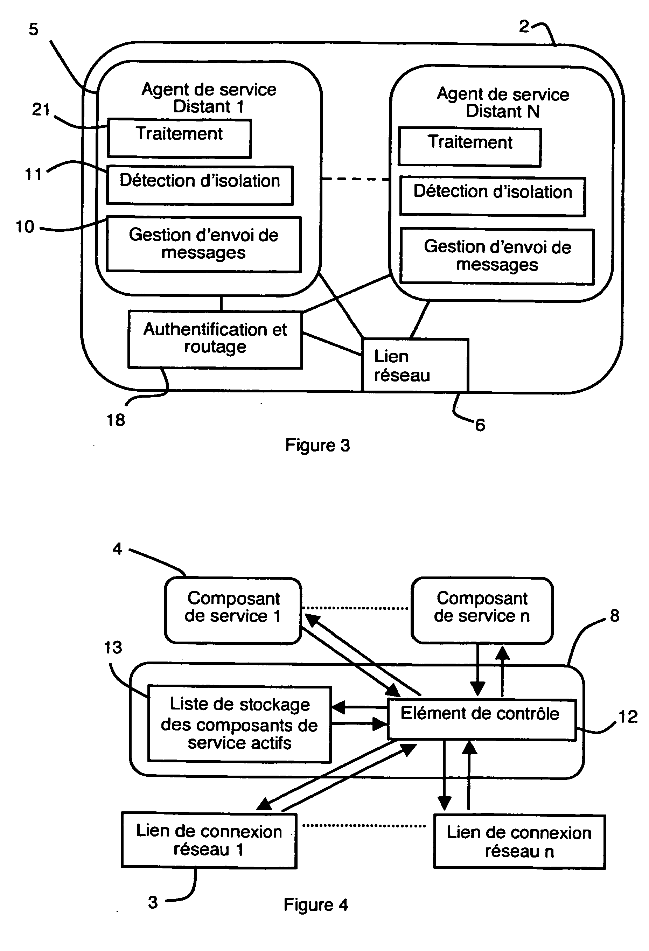

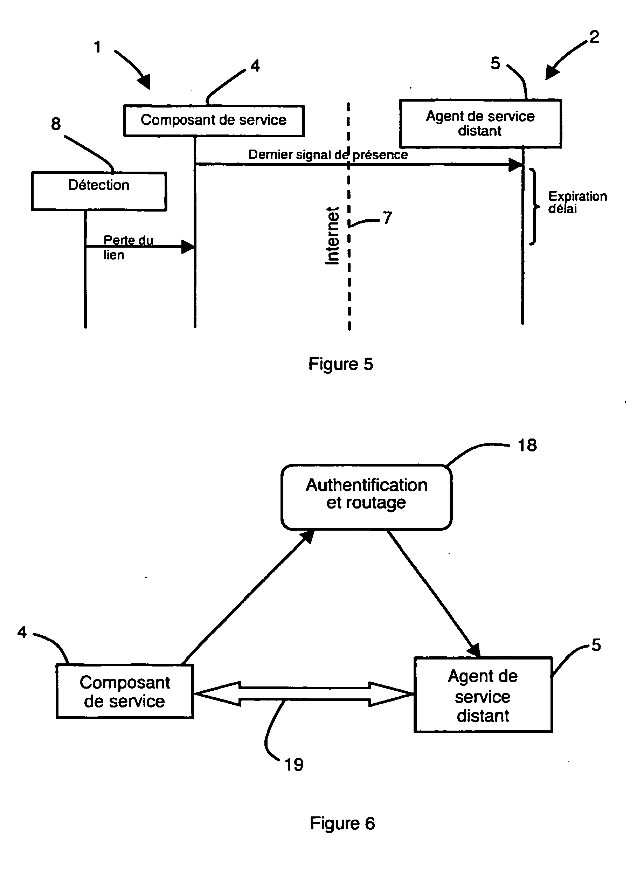

Le système d'interconnexion, illustré aux figures 1 à 3, comporte au moins un appareil de communication 1 et au moins un système d'information distant 2. L'appareil de communication 1 comporte au moins un lien de connexion réseau 3 et au moins un composant de service 4 relié au lien de connexion réseau 3. Dans le mode de réalisation particulier illustré à la figure 2, l'appareil de communication 1 comporte n liens de connexion réseau 3. Le système d'information distant 2 comporte au moins un agent de service distant 5 affecté à un composant de service 4 (figure 3, les agents de services sont représentés de 1 à N), des moyens d'authentification et de routage 18 et un lien de connexion réseau 6. Le lien de connexion réseau 6 est relié à l'agent de service distant 5 et aux moyens d'authentification et de routage 18, et les moyens d'authentification et de routage 18 sont reliés à chaque agent de service distant 5. L'appareil de communication 1 et le système d'information distant 2 peuvent être reliés par l'intermédiaire de l'un des liens réseau 3, par une liaison 7 de type Internet, au lien de connexion réseau 6. Comme illustré à la figure 6, après authentification, un canal de communication 19 est établi entre le composant de service 4 et l'agent de service distant 5 associé, en utilisant la liaison 7 de type Internet. Les moyens d'authentification et de routage 18 routent, après authentification du composant de service 4, le composant de service 4 vers l'agent de service distant 5 qui lui est associé, ce qui permet l'établissement du canal de communication 19.

L'appareil de communication 1 peut, à titre d'exemple, être un téléphone mobile, un assistant personnel, système mobile embarqué, etc. Les liens de connexion réseau 3 sont définis comme étant des protocoles réseaux, permettant, par exemple, une connexion à un réseau sans fil de type WIFI, une connexion infrarouge ou assurant une liaison par ondes radio. L'appareil de communication 1 comporte des moyens de détection de réseau 8, pour détecter la présence de réseaux (WIFI, infrarouge, radio, etc.) accessibles par l'appareil de communication 1. Ces moyens de détection de réseau 8 sont connectés au composant de service 4. Le composant de service 4 a pour rôle de fournir un service à un utilisateur. À titre d'exemple, un service de météo informe l'utilisateur de l'évolution du temps, un service de bourse permet à l'utilisateur de suivre l'évolution des cours de la bourse sur son appareil de communication 1.

Le composant de service 4 comporte des moyens 9 d'émission, avec une période prédéterminée, ajustable au moins une fois par l'agent de service distant 5, de signaux de notification de présence 9 destinés à être transmis à l'agent de service distant 5 par l'intermédiaire du canal 19.

L'agent de service distant 5 comporte des moyens de traitement 21 et des moyens 11 de détection pour détecter si l'appareil de communication 1 est isolé, c'est-à-dire si le composant de service 4 n'est plus joignable par le canal de communication 19. Pour cela, les moyens 11 de détection de l'isolation de l'appareil de communication coopèrent, lorsque le canal de communication 19 est établi entre le composant de service 4 et l'agent de service distant 5, avec les moyens 9 d'émission de signaux de notification de présence du composant de service 4. La transmission, à intervalles réguliers, des signaux de notification de présence par le canal de communication 19 permet à l'agent de service distant 5 de déterminer si l'appareil mobile est isolé du réseau, en l'absence de réception de signaux de notification de présence, mais aussi de maintenir le canal de communication 19 actif.

Les moyens d'authentification et de routage 18 du système d'information distant 2 permettent de créer le canal de communication 19 entre le composant de service 4 et l'agent de service distant 5 associé. Pour un composant de service 4 donné, les moyens d'authentification et de routage 18 créent un canal entre le composant de service 4 et l'agent de service distant 5 associé. De préférence, ce canal de communication 19 est sécurisé et peut utiliser le protocole sécurisé SSL (« Secure Socket Layer «). L'utilisation des moyens d'authentification et de routage 18 sécurisés permet au composant de service 4 de contacter un agent de service distant 5 dont les données peuvent êtres confidentielles, requérir un abonnement, par exemple une application bancaire communiquant des informations sur des comptes bancaires ou des transactions en bourse, relever de la vie privée et nécessiter une protection. Le protocole SSL est un protocole client/serveur remplissant quatre objectifs de sécurité. Le premier est l'authentification du serveur, le second la confidentialité des données échangées, le troisième l'intégrité des données échangées et enfin, de manière optionnelle, il peut fournir l'authentification par certificat numérique du client. Bien entendu lors de l'utilisation d'un canal de communication 19 sécurisé, les moyens d'authentification et de routage 18 ne sont pas limités au protocole SSL. À titre d'exemple, les protocoles utilisés peuvent être TLS (« Transport Layer Security ») et D-TLS (« Datagram Transport Layer Security »).

Avant de donner un accès à l'agent de service distant 5, les moyens d'authentification et de routage 18 vérifient si le composant de service 4 est autorisé à se connecter, puis ils créent un canal de communication 19 entre le composant de service 4 et l'agent de service distant 5 qui lui est affecté. De plus, lors d'une phase de déconnexion, il faut en informer les moyens d'authentification et de routage 18. En général, pour s'identifier auprès des moyens d'authentification et de routage 18 du système d'information distant 2, le composant de service 4 envoie, lors de la demande d'établissement de connexion, un couple identifiant et mot de passe, permettant aux moyens d'authentification et de routage 18 de vérifier l'identité du composant de service 4 et de créer le canal de communication 19 vers l'agent de service distant 5 qui lui est affecté. Il envoie également des informations pertinentes correspondant à son profil. Le canal de communication 19 permet de contourner les systèmes de sécurité et notamment les pare-feux car il est initié par l'appareil de communication 1. Une fois le canal de communication 19 en place, l'agent de service distant 5 peut envoyer des messages au composant de service 4 sans intervention de celui-ci, bien entendu, le composant de service 4 peut aussi demander des informations à l'agent de service distant 5, qui lui répondra. Le canal de communication 19 est maintenu actif par les signaux de notification de présence, ce qui évite son interruption lorsque qu'aucun message n'est échangé et permet de détecter rapidement, si l'appareil mobile est toujours connecté au réseau.

Comme illustré à la figure 5, l'isolation entre le réseau et l'appareil communication 1 est détecté par l'agent de service distant 5 par les moyens de détection 11. En effet, après l'établissement d'une connexion internet par le composant de service, puis lorsqu'un canal de communication 19 a été établi entre le composant de service 4 et l'agent de service distant 5, le composant de service 4 signale sa présence à l'agent de service distant 5 à intervalles réguliers, l'intervalle étant défini par l'agent de service distant 5, via le canal de communication 19. L'agent de service distant 5 compare la durée écoulée à partir de la réception d'un signal de notification de présence à un seuil prédéterminé. Si après réception d'un signal de notification de présence, ce seuil est dépassé sans qu'aucun nouveau signal de notification de présence ne soit reçu par l'agent de service distant 5, c'est-à-dire à l'expiration d'un délai correspondant à ce seuil, l'agent de service distant 5 en déduit que l'appareil de communication 1 est isolé. L'isolation détectée, l'agent de service distant supprime le canal de communication 19 vers le composant de service 4 de l'appareil de communication 1. Du côté du composant de service 4, lorsque les moyens de détection de réseau 8 détectent qu'aucun réseau n'est disponible (perte de lien), ils en informent le composant de service 4 qui supprime alors, du côté de l'appareil de communication 1 le canal de communication 19 vers l'agent de service distant 5.

Ainsi, le système d'information distant cesse tout envoi de données à l'appareil de communication 1 s'il détecte une perte de connexion, permettant ainsi d'économiser ses ressources et sa bande passante. En effet, le système d'information traite des données et dans certaines conditions sollicitant fortement son unité de calcul et sa bande passante, par exemple une surcharge de connexion d'appareils de communication 1, il est nécessaire de couper les connexions inactives au plus vite. Ce type de situation d'urgence peut entraîner une modification de la période d'émission de signaux de notification de présence du composant de service 4 par l'agent distant 5 qui cherche à économiser les ressources du système d'information distant 2. Pour cela, l'agent de service distant 5 comporte des moyens d'ajustement de la période d'émission des signaux de notification de présence du composant de service 4.

Lorsqu'un canal de communication 19 est établi, l'agent de service distant 5 peut envoyer des messages au composant de service 4 et vice-versa. L'agent de service distant 5 envoie des messages selon le principe du « push applicatif », c'est-à-dire que des messages sont envoyés au composant de service sans que celui-ci en fasse la demande. Les messages sont simplement poussés en temps réels vers l'appareil de communication 1 selon les besoins. Par exemple, pour un service de bourse, en cas de chute ou de montée des cours, le composant de service 4 sera tenu informé par l'agent de service distant 5 de manière continue sur une base de temps de l'ordre de la minute, alors que si le cours reste stable l'envoi d'information toutes les heures sera jugée suffisante.

Dans le mode de réalisation particulier illustré à la figure 4, les moyens de détection de réseau 8 destinés à détecter les réseaux accessibles par l'appareil de communication 1 comportent un élément de contrôle 12 et une liste de stockage 13 des composants de services actifs. L'appareil de communication 1 peut comporter plusieurs composants de service 4 (de 1 à n sur la figure 4). Ceux-ci peuvent être actifs, c'est-à-dire vouloir se connecter à un agent de service distant 5 correspondant, et sont donc intéressés à connaître les liens de connexion réseau 3 accessibles. Lorsqu'un composant de service 4 est activé, il en informe l'élément de contrôle 12, qui range alors dans la liste de stockage 13 un identifiant de chacun des composants de service 4 qui se sont déclarés actifs. Dès qu'un ou plusieurs liens de connexion réseau 3 devient actif, l'élément de contrôle 12, qui surveille la disponibilité de chacun des liens de connexion réseau 3, récupère dans la liste de stockage 13 la liste de tous les composants de service 4 actifs et contacte chacun de ces composants 4 pour les informer qu'un lien de connexion réseau 3 est accessible. Ainsi, chaque composant de service 4 peut établir une connexion Internet par l'intermédiaire de l'un des réseaux accessibles, puis mettre en place un canal de communication 19, en passant par les moyens d'authentification et de routage 18 du système d'information distant 2. Lorsque plusieurs types de connexion (WIFI, infrarouge, radio, etc.) sont accessibles, le composant de service 4 utilise la connexion la plus fiable et la plus rapide. Si un composant de service 4 veut se désactiver, il contacte l'élément de contrôle 12 pour l'informer qu'il n'est plus intéressé par les liens de connexion réseau 3 actifs. L'élément de contrôle 12 retire alors de la liste de stockage 13 des composants actifs les données associées au composant de service 4 concerné.

Dans un mode de réalisation préférentiel, au moment de l'établissement du canal de communication 19, le composant de service 4 envoie lors de la demande d'ouverture du canal 19 des informations sur le type de lien de connexion réseau 3 utilisé pour l'établissement du canal de communication 19. En réponse, l'agent de service distant 5 fixe, par ses moyens d'ajustement de la période, la valeur de la période avec laquelle les moyens 9 d'émission de signaux de notification de présence doivent envoyer ces signaux. Cette période peut être optimisée automatiquement en fonction du type de réseau utilisé. La valeur de la période d'émission de signaux de notification de présence peut donc être définie par l'agent de service distant 5 en fonction d'au moins un ou plusieurs des attributs suivants envoyés par l'appareil de communication au moment de la demande de l'établissement du canal de communication 19 :
- le type de réseau comme WIFI, GPRS (« General Packet Radio Service » en anglais), GSM (« Global System for Mobile Communications » ), UMTS (« Universal Mobile Telecommunications System » en anglais), troisième génération (« 3G »), WIMAX ou autre,
- le point d'accès correspondant au nom du réseau à partir duquel se connecte l'appareil de communication, permettant d'identifier certaines situations,
- le réseau opérateur permettant de savoir si l'on est connecté chez un opérateur tierce (« roaming , en anglais) pouvant appliquer des charges supplémentaire au niveau des données échangées,
- réseau sans fil privé connu et gratuit.

A titre d'exemple, cette période est d'autant plus courte que le débit du réseau est élevé (plus élevé pour une connexion WIFI que pour une connexion infrarouge) et/ou les coûts bas (par exemple connexion WIFI privée). Lors de l'établissement du canal de communication 19, le système d'information distant peut à la réception des informations relatives au réseau calculer une valeur minimale de la période d'émission de signaux de notification de présence. Cette valeur minimale peut être déterminée en fonction du type de réseau et d'une valeur prédéterminée par les moyens de traitement. Si la partie applicative du système d'information disant nécessite l'envoi de signaux de notification de présence toutes les 5 secondes mais que le réseau sur lequel est connecté l'appareil de communication ne peut supporter l'émission de signaux que toutes les 10 secondes, on prendra la valeur maximale entre les deux dans tous les cas.

Durant la période d'activité du canal de communication 19, l'agent de service distant 5 peut, de plus, ajuster automatiquement la période d'émission des signaux de notification de présence du composant de service 4 en fonction d'un seuil d'urgence. Le seuil d'urgence peut notamment être modifié si l'agent de service distant 5 a besoin de connaître plus finement l'état de connexion du composant de service 4. À titre d'exemple, s'il y a un krach boursier, l'agent de service distant va modifier le seuil d'urgence de manière à déterminer plus finement une isolation réseau de l'appareil de communication 1, en cohérence avec les messages d'information poussés à un intervalle de l'ordre de la seconde. Ce mécanisme évite d'envoyer des centaines de messages avant de déterminer que l'appareil de communication 1 n'est plus joignable, permettant ainsi une gestion efficace des ressources du système d'information distant 2.

L'ajustement ultérieur de la période d'émission des signaux de notification de présence par les moyens d'ajustement de l'agent distant 5 peut être déterminé par les moyens de traitement 20 qui informent l'agent de service distant 5 de la nouvelle valeur de la période à propager au composant de service associé. Si l'agent de service distant 5 est dans un état où il sait que le composant de service 4 est toujours présent, il propage la mise à jour de la période audit composant de service 4 qui renvoie un acquittement de la nouvelle valeur. À la réception de l'acquittement, l'agent de service 5 distant valide la nouvelle valeur et c'est cette dernière qui sera utilisée comme seuil pour détecter une isolation réseau. Si l'agent de service distant 5 ne reçoit pas d'acquittement, il clôt le canal de communication 19.

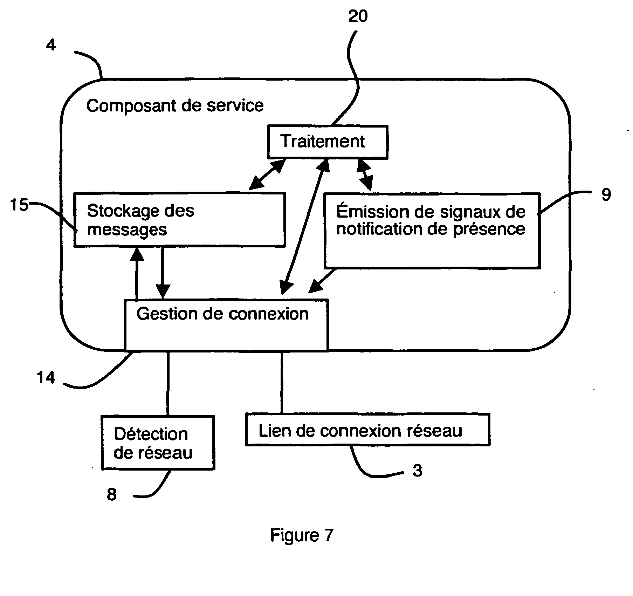

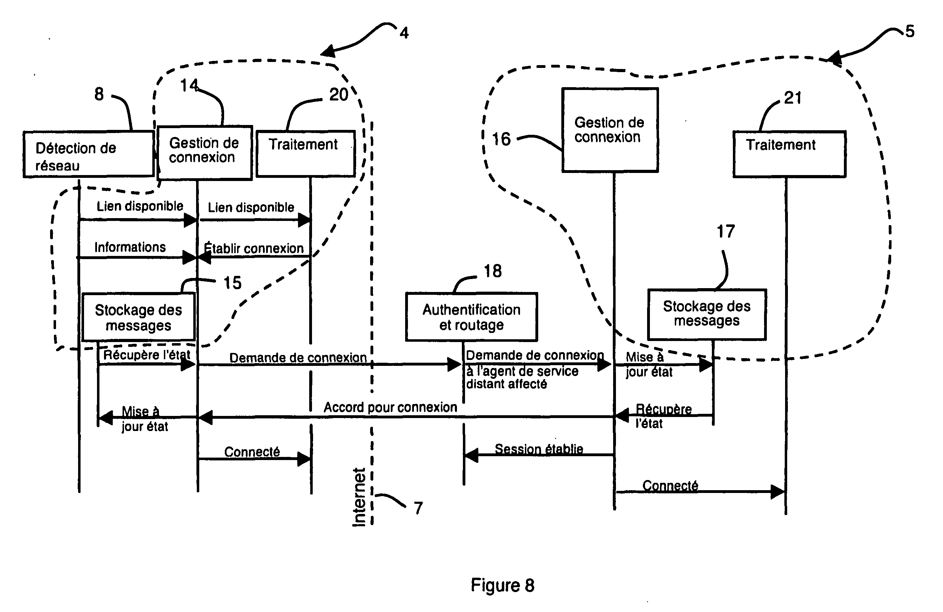

Dans le mode de réalisation particulier illustré à la figure 7, le composant de service 4 comporte des moyens de traitement 20 connectés à des moyens 14 de gestion de connexion réseau, à des moyens 15 de stockage des messages et aux moyens 9 d'émission de signaux notification de présence. Les moyens 9 d'émission de signaux de notification de présence et les moyens 15 de stockage des messages du composant de service 4, ainsi que les moyens de détection de réseau 8 et les liens de connexion réseau 3 de l'appareil de communication 1 sont connectés aux moyens 14 de gestion de connexion réseau du composant de service 4. Lorsqu'un canal de communication 19 est établi, les messages sont envoyés par le composant de service 4 vers l'agent de service distant 5, via le canal de communication 19, par les moyens 14 de gestion de connexion réseau. Si le canal de communication 19 n'est pas actif, les messages sont stockés dans les moyens de stockage 15. À titre d'exemple, les moyens de stockages 15 peuvent être des supports persistants du type disque dur, mémoire, etc. Quand le canal de communication 19 est de nouveau établi, les moyens 14 de gestion de connexion réseau récupèrent les messages en attente dans les moyens 15 de stockage des messages et les envoient vers l'agent de service distant 5. Les moyens 15 de stockage peuvent constituer une pile de type FIFO (« First In First Out ») dans laquelle le premier message arrivé est délivré le premier. Par un mécanisme de priorité, les messages importants peuvent êtres stockés en bas de la pile, pour être délivrés les premiers lors d'une reconnexion. Une architecture similaire se retrouve au niveau de l'agent de service distant 5 (figure 8), qui possède des moyens 16 de gestion de connexion reliés à des moyens 17 de stockage des messages et aux moyens de traitement 21, reliant aussi les moyens 17 de stockage des messages, chacun étant relié au lien de connexion réseau 6. Le canal de communication 19 entre le composant de service 4 et l'agent de service distant 5 est ainsi établi entre les moyens 14 et 16 de gestion de connexion réseau. Les messages en attente peuvent être supprimés au bout d'un certain temps si leur délivrance n'apporte rien à l'utilisateur. À titre d'exemple des messages contenant les prévisions météo de la veille ne sont d'aucune utilité, et ne seront pas délivrés.

La figure 8 illustre les diverses étapes de connexion de l'appareil de communication 1 au système d'information distant 2. Tout d'abord, les moyens 8 de détection de réseau de l'appareil de communication 1 informent (« liens disponibles ») les moyens 14 de gestion de connexion réseau du composant de service de l'appareil de communication 1 qu'au moins un lien de connexion réseau 3 est disponible. Les moyens 14 de gestion de connexion transfèrent cette information (« lien disponible ») aux moyens de traitement 20, c'est-à-dire à une partie applicative du composant de service 4 dont ils font partie. Les moyens de traitement 20 décident de connecter le composant de service 4 à l'agent de service distant 5 correspondant et informent (« établir connexion ») les moyens 14 de gestion de connexion réseau du composant de service 4 qu'une connexion doit être établie.

La demande de connexion se traduit par l'établissement d'une connexion Internet par le lien de connexion réseau 3 choisi. L'établissement de la connexion déclenche l'envoi d'informations (« information ») concernant le réseau choisi des moyens de détection de réseau 8 vers les moyens 14 de gestion de connexion réseau du composant de service 4. Les moyens 14 de gestion de connexion récupèrent (« récupère état ») les informations représentatives du contenu des moyens 15 de stockage s'il y a lieu, par exemple les messages eux-mêmes, leur nombre, etc. Puis, ils demandent l'initialisation du canal de communication 19 en envoyant au système d'information distant 2 un message (« demande de connexion »), transmis au moyens d'authentification et de routage 18, contenant des informations sur l'identification du composant de service 4, les informations concernant le réseau choisi et les messages stockés dans les moyens de stockage 15. Lorsque le message (« demande de connexion ») est reçu par les moyens d'authentification et de routage 18 du système d'information distant 2, celui-ci vérifie si le composant de service 4 concerné est autorisé à joindre l'agent de service distant 5. Si une telle autorisation est donnée, le message (« demande de connexion ») est routé vers des moyens 16 de gestion de connexion de l'agent de service distant 5 affecté au composant de service 4, qui met à jour (« mise à jour état ») ses moyens de stockages 17 avec les informations contenues dans le message reçu et concernant l'état des moyens de stockages 15 du composant de service 4. Puis les moyens 16 récupèrent le nouvel état (« récupère état ») des moyens de stockage 17. L'agent de service distant 5 répond au composant de service 4 que la connexion est établie (« accord pour connexion ») et lui transmet la période d'émission choisie pour les signaux de notification de présence. Puis, il informe les moyens de traitement 21 l'agent de service distant et les moyens d'authentification et de routage 18 que le canal de communication 19 est établi. À la réception par les moyens 14 de gestion de connexion du composant de service 4 du message de réponse (« accord pour connexion ») de l'agent de service distant 5 qui l'informe que la connexion est établie, les moyens 14 de gestion de connexion du composant de service 4 mettent à jour l'état des moyens 15 de stockage de messages (« mise à jour ») et informent (« connecté ») les moyens de traitement 20 du composant de service 4 que la connexion est active. Ensuite, le composant de service 4 active l'émission périodique des messages de notification de présence en fonction des informations transmises sur la valeur de cette période par l'agent de service distant 5 lors de l'établissement du canal de communication 19 ou d'un ajustement ultérieur de la période d'émission des signaux de notification de présence en fonction de l'évolution du seuil d'urgence. Le composant de service 4 et l'agent de service distant 5 peuvent alors s'échanger des messages par l'intermédiaire du canal de communication 19.

Dans un mode de réalisation préférentiel illustré à la figure 4, l'appareil de communication 1 comporte une pluralité de composants de service 4, chaque composant de service 4 se connectant à un agent de service distant 5, auquel il est associé. Ces différents agents de service 5 distincts peuvent se situer dans des systèmes d'information distants 2 distincts. Ainsi, l'appareil de communication 1 peut communiquer directement avec les agents de service distant 5 de plusieurs systèmes d'information distants 2. L'appareil de communication 1 permet alors l'accès à du contenu multi-application sur des réseaux distincts dont les données sont transmises en temps réel par « push » applicatif sans que l'utilisateur n'ait à intervenir.

Le système d'interconnexion décrit ci-dessus résout les problèmes de contournement des composants de sécurité, comme la translation d'adresse, les pare-feux, etc. De plus, il permet de proposer un système de composant de service fédérateur apte à donner à un utilisateur final des informations en temps réel sur des sujets l'intéressant. L'agent de service distant 5 est une façade permettant notamment l'accès à un serveur associé au système d'information distant 2 correspondant, par exemple à un serveur d'entreprise privée, un serveur de banque, de météo, etc.

De manière générale, le procédé d'interconnexion entre un appareil de communication 1 et au moins un système d'information distant 2 comporte au moins les étapes successives suivantes :
- le composant de service 4 établit une connexion Internet,
- le composant de service 4 établit via la connexion Internet, un canal de communication 19 avec l'agent de service distant 5 correspondant,
- le composant de service 4 envoie des signaux de notification de présence à l'agent de service distant 5, avec une période réglable définie par l'agent de service distant 5 au moins une fois après l'établissement du canal de communication, cette période pouvant être définie en fonction du type de réseau et des recommandations du système d'information distant,
- l'agent de service distant 5 recevant les signaux de notification de présence compare la durée écoulée depuis la réception du dernier signal de notification de présence à un seuil prédéterminé, et, si cette durée devient supérieure au seuil sans réception d'un nouveau signal de notification de présence, l'agent de service distant 5 en déduit que le composant de service 4 n'est plus joignable et il supprime le canal de communication.

Ainsi le système d'interconnexion permet de connecter plusieurs appareils de communication 1 à au moins un système d'information distant 2, chaque composant de service 4 de chaque appareil de communication 1 étant relié par un canal de communication 19 à un agent de service distant 5 spécifique qui lui est associé. Chaque agent de service distant 5 est alors capable de déterminer la présence applicative du composant de service 4 correspondant. La présence applicative d'un composant de service 4 implique l'activation du composant de service 4 au niveau de l'appareil de communication 1 et la connexion de l'appareil de communication 1 au réseau Internet. Afin de déterminer cette présence applicative, l'agent de service distant 5 fonctionne alors comme un détecteur de défaillance. La réception de messages de notification de présence permet à l'agent de service distant 5 de déterminer cette présence applicative avec une précision, qui peut être ajustable par l'agent de service distant 5. L'agent de service distant 5 reçoit les signaux de notification de présence et compare la durée écoulée depuis la réception du dernier signal de notification de présence à un seuil prédéterminé. Si cette durée devient supérieure au seuil sans réception d'un nouveau signal de notification de présence, l'agent de service distant en déduit que le composant de service n'est plus joignable et il supprime le canal de communication. En effet, après un certain délai suivant la réception d'un signal de notification de présence en provenance du composant de service 4, l'agent de service distant 5 n'a pas reçu d'autres messages de notification de présence, l'agent de service distant 5 considère que le composant de service 4 associé ne peut être joint. Le système tel que décrit permet donc, à un agent de service distant 5 donné, de connaître la possibilité de joindre le composant de service 4 associé de la manière la plus fine possible.

L'invention n'est pas limitée aux modes particuliers de réalisation décrit ci-dessus. En particulier, le dispositif peut être appliqué à tout type d'appareil de communication mobile (téléphone, agenda personnel etc.) ou fixe, tel qu'une station de travail.

## Revendications

1. Système d'interconnexion comportant au moins un appareil de communication (1) associé à un système d'information distant (2), l'appareil de communication (1) comportant :
- au moins un premier lien de connexion réseau (3),
- un composant de service (4), connecté au premier lien de connexion réseau (3) et comportant des moyens d'émission, avec une période prédéterminée, de signaux de notification de présence,
le système d'information distant (2) comportant :
- un second lien de connexion réseau (6), et
- un agent de service distant (5), affecté audit composant de service (4), ledit agent de service distant (5) étant connecté audit second lien de connexion réseau (6),
le composant de service (4) et l'agent de service distant (5) étant reliés par un canal de communication (19) pour transmettre les signaux de notification de présence,
le système étant tel que l'agent de service distant (5) comporte :
- des moyens d'ajustement de la période d'émission des signaux de notification de présence du composant de service (4), et
- des moyens de détection (11) pour détecter une isolation du composant de service (4) par rapport à l'agent de service distant (5) en l'absence de réception d'un signal de notification de présence du composant de service (4).

2. Système selon la revendication 1, **caractérisé en ce que** l'appareil de communication est mobile.

3. Système selon l'une des revendications 1 et 2, **caractérisé en ce que** le canal de communication (19) est sécurisé.

4. Système selon la revendication 3, **caractérisé en ce que** le canal de communication sécurisé (19) entre le composant de service (4) et l'agent de service distant (5) est de type SSL.

5. Système selon l'une quelconque des revendications 1 à 4, **caractérisé en ce que** l'appareil de communication (1) comporte des moyens de détection de réseau (8) pour détecter la présence d'un réseau accessible par les premiers liens de connexion réseau (3), lesdits moyens de détection (8) étant connectés au composant de service (4).

6. Système selon la revendication 5, **caractérisé en ce que** les moyens de détection de réseau (8) de l'appareil de communication (1) comportent un élément de contrôle (12), connecté aux premiers liens de connexion réseau (3) et à une liste (13) de stockage des composants de service (4) actifs.

7. Système selon l'une quelconque des revendications 1 à 6, **caractérisé en ce que** le composant de service (4) et l'agent de service distant (5) associé comportent chacun des moyens (15,17) de stockage des messages à transmettre.

8. Procédé d'interconnexion entre un appareil de communication (1) et au moins un système d'information distant (2) d'un système d'interconnexion selon l'une quelconque des revendications 1 à 7, tel qu'il comporte les étapes successives suivantes :
- un composant de service (4) de l'appareil de communication établit une connexion Internet,
- le composant de service (4) établit via la connexion Internet, un canal d communication (19) avec un agent de service distant (5) correspondant du système d'information,
- le composant de service (4) envoie des signaux de notification de présence à l'agent de service distant (5), avec une période réglable définie par l'agent de service distant (5) au moins une fois après l'établissement du canal de communication,
- l'agent de service distant (5) recevant les signaux de notification de présence compare la durée écoulée depuis la réception du dernier signal de notification de présence à un seuil prédéterminé, et, si cette durée devient supérieure au seuil sans réception d'un nouveau signal de notification de présence, l'agent de service distant en déduit que le composant de service n'est plus joignable et il supprime le canal de communication.

9. Procédé selon la revendication 8, **caractérisé en ce que** l'appareil de communication (1) comportant une pluralité de composants de service, avant d'établir la connexion à Internet, le procédé comporte les étapes suivantes :
- chaque composant de service (4) intéressé se déclare actif à un élément de contrôle (12) de moyens de détection de réseau (8) de l'appareil de communication (1),
- l'élément de contrôle (12) de l'appareil de communication (1) indique à chaque composant de service (4) actif les types de réseau accessible.

10. Procédé selon la revendication 9, **caractérisé en ce que** lors de l'établissement du canal de communication (19), le composant de service (4) envoie des informations sur un premier lien de connexion reseau (3) de l'appareil de communication à l'agent de service distant (5) qui ajuste de manière automatique la période d'envoi des signaux de notification de présence du composant de service (4) en fonction du type du premier lien de connexion réseau et/ou d'un seuil d'urgence.

## Claims

1. Interconnection system comprising at least one communication device (1) associated to a remote data system (2), the communication device (1) comprising:
- at least a first network connection link (3),
- a service component (4), connected to the first network connection link (3) and comprising means for emitting presence notification signals with a predefined period,
the remote data system (2) comprising:
- a second network connection link (6), and
- a remote service agent (5), assigned to said service component (4), said remote service agent (5) being connected to said second network connection link (6),
the service component (4) and the remote service agent (5) being connected by a communication channel (19) for transmitting the presence notification signals,
the system wherein the remote service agent (5) comprises:
- means for adjusting the emission period of the presence notification signals of the service component (4), and
- detection means (11) for detecting isolation of the service component (4) with respect to the remote service agent (5) in the absence of receipt of a presence notification signal from the service component (4).

2. System according to claim 1, **characterized in that** the communication device is mobile.

3. System according to one of claims 1 and 2, **characterized in that** the communication channel (19) is secured.

4. System according to claim 3, **characterized in that** the secured communication channel (19) between the service component (4) and the remote service agent (5) is of SSL type.

5. System according to any one of claims 1 to 4, **characterized in that** the communication device (1) comprises network detection means (8) to detect the presence of a network accessible by the first network connection links (3), said detection means (8) being connected to the service component (4).

6. System according to claim 5, **characterized in that** the network detection means (8) of the communication device (1) comprise a monitoring element (12) connected to the first network connection links (3) and to a storage list (13) of the active service components (4).

7. System according to any one of claims 1 to 6, **characterized in that** the service component (4) and the associated remote service agent (5) each comprise means (15,17) for storing the messages to be transmitted.

8. Interconnection method between a communication device (1) and at least one remote data system (2) of an interconnection system according to any one of claims 1 to 7, wherein it comprises the following successive steps:
- a service component (4) of the communication device establishes an Internet connection,
- the service component (4) establishes a communication channel (19) with a corresponding remote service agent (5) of the data system via the Internet connection,
- the service component (4) sends presence notification signals to the remote service agent (5) with an adjustable period defined by the remote service agent (5) at least once after the communication channel has been established,
- the remote service agent (5) receiving the presence notification signals compares the time elapsed since receipt of the last presence notification signal with a predefined threshold, and, if this time becomes longer than the threshold without a new presence notification signal being received, the remote service agent deduces from this that the service component can no longer be reached and deletes the communication channel.

9. Method according to claim 8, **characterized in that**, the communication device (1) comprising a plurality of service components (4), before the Internet connection is established, the method comprises the following steps:
- each service component (4) that is interested declares itself active to a monitoring element (12) of a network detection means (8) of the communication device (1),
- the monitoring element (12) of the communication device (1) indicates the types of network accessible to each active service component (4).

10. Method according to claim 9, **characterized in that**, during the establishment of the communication channel (19), the service component (4) sends data on a first network connection link (3) of the communication device to the remote service agent (5) which automatically adjusts the sending period of the presence notification signals of the service component (4) according to the type of the first network connection link and/or to an emergency threshold.

## Patentansprüche

1. Verbindungssystem, das wenigstens ein Kommunikationsgerät (1) umfasst, das einem Ferninformationssystem (2) zugeordnet ist, wobei das Kommunikationsgerät (1) umfasst:
- wenigstens ein erstes Netzverbindungsglied (3),
- eine Dienstkomponente (4), die mit dem ersten Netzverbindungsglied (3) verbunden ist und Mittel zum Senden von Anwesenheitsbenachrichtigungssignalen mit einer vorbestimmten Periode umfasst,
wobei das Ferninformationssystem (2) umfasst:
- ein zweites Netzverbindungsglied (6) und
- einen entfernten Dienstagenten (5), welcher der Dienstkomponente (4) zugeordnet ist, wobei der entfernte Dienstagent (5) mit dem zweiten Netzverbindungsglied (6) verbunden ist,
wobei die Dienstkomponente (4) und der entfernte Dienstagent (5) über einen Kommunikationskanal (19) verbunden sind, um die Anwesenheitsbenachrichtigungssignale zu übertragen,
wobei das System derart ist, dass der entfernte Dienstagent (5) umfasst:
- Mittel zum Einstellen der Periode zum Senden der Anwesenheitsbenachrichtigungssignale der Dienstkomponente (4) und
- Erfassungsmittel (11) zum Erfassen einer Isolierung der Dienstkomponente (4) von dem entfernten Dienstagenten (5), wenn kein Anwesenheitsbenachrichtigungssignal von der Dienstkomponente (4) empfangen wird.

2. System nach Anspruch 1, **dadurch gekennzeichnet, dass** das Kommunikationsgerät mobil ist.

3. System nach einem der Ansprüche 1 und 2, **dadurch gekennzeichnet, dass** der Kommunikationskanal (19) gesichert ist.

4. System nach Anspruch 3, **dadurch gekennzeichnet, dass** der gesicherte Kommunikationskanal (19) zwischen der Dienstkomponente (4) und dem entfernten Dienstagenten (5) vom Typ SSL ist.

5. System nach einem der Ansprüche 1 bis 4, **dadurch gekennzeichnet, dass** das Kommunikationsgerät (1) Netzerfassungsmittel (8) umfasst, um die Anwesenheit eines über die ersten Netzverbindungsglieder (3) zugänglichen Netzes zu erfassen, wobei die Erfassungsmittel (8) mit der Dienstkomponente (4) verbunden sind.

6. System nach Anspruch 5, **dadurch gekennzeichnet, dass** die Netzerfassungsmittel (8) des Kommunikationsgerätes (1) ein Kontrollelement (12) umfassen, das mit den ersten Netzverbindungsgliedern (3) und mit einer Liste (13) zum Speichern der aktiven Dienstkomponenten (4) verbunden ist.

7. System nach einem der Ansprüche 1 bis 6, **dadurch gekennzeichnet, dass** die Dienstkomponente (4) und der zugeordnete entfernte Dienstagent (5) jeweils Mittel (15, 17) zum Speichern der zu übertragenden Mitteilungen umfassen.

8. Verfahren zur Verbindung zwischen einem Kommunikationsgerät (1) und wenigstens einem Ferninformationssystem (2) eines Verbindungssystems nach einem der Ansprüche 1 bis 7, welches derart ist, dass es die folgenden aufeinander folgenden Schritte umfasst:
- eine Dienstkomponente (4) des Kommunikationsgerätes stellt eine Internetverbindung her,
- die Dienstkomponente (4) richtet über die Internetverbindung einen Kommunikationskanal (19) mit einem entsprechenden entfernten Dienstagenten (5) des Informationssystems ein,
- die Dienstkomponente (4) sendet Anwesenheitsbenachrichtigungssignale an den entfernten Dienstagenten (5) mit einer einstellbaren Periode, die durch den entfernten Dienstagenten (5) definiert wird, wenigstens einmal nach Einrichten des Kommunikationskanals,
- der entfernte Dienstagent (5), der die Anwesenheitsbenachrichtigungssignale empfängt, vergleicht die seit dem Empfang des letzten Anwesenheitsbenachrichtigungssignals verstrichene Zeitdauer mit einer vorbestimmten Schwelle, und wenn diese Zeitdauer die Schwelle ohne Empfang eines neuen Anwesenheitsbenachrichtigungssignals überschreitet, folgert der entfernte Dienstagent hieraus, dass die Dienstkomponente nicht mehr erreichbar ist, und hebt den Kommunikationskanal auf.

9. Verfahren nach Anspruch 8, **dadurch gekennzeichnet, dass** - wenn das Kommunikationsgerät (1) eine Vielzahl von Dienstkomponenten umfasst - das Verfahren, vor Herstellen der Verbindung mit dem Internet, die folgenden Schritte umfasst:
- jede in Betracht kommende Dienstkomponente (4) erklärt sich einem Kontrollelement (12) von Netzerfassungsmittein (8) des Kommunikationsgerätes (1) für aktiv,
- das Kontrollelement (12) des Kommunikationsgerätes (1) gibt jeder aktiven Dienstkomponente (4) die Arten des zugänglichen Netzes an.

10. Verfahren nach Anspruch 9, **dadurch gekennzeichnet, dass** bei Einrichten des Kommunikationskanals (19) die Dienstkomponente (4) Informationen über ein erstes Netzverbindungsglied (3) des Kommunikationsgerätes an den entfernten Dienstagenten (5) sendet, der die Sendeperiode der Anwesenheitsbenachrichtigungssignale der Dienstkomponente (4) in Abhängigkeit des Typs des ersten Netzverbindungsgliedes und/oder einer Dringlichkeitsschwelle automatisch einstellt.
